# EUROPÄISCHE PATENTSCHRIFT

(11) **EP 3 274 238 B1**
(45) Veröffentlichungstag und Bekanntmachung des Hinweises auf die Patenterteilung: **03.04.2019**
(21) Anmeldenummer: 16720112.8
(22) Anmeldetag: 03.05.2016
(51) Int. Cl.: B61D 27/00

(54) **KLIMATISIERUNGSEINRICHTUNG, INSBESONDERE FÜR EIN FAHRZEUG**
AIR CONDITIONING DEVICE, IN PARTICULAR FOR A VEHICLE
DISPOSITIF DE CLIMATISATION, EN PARTICULIER POUR UN VÉHICULE

(30) Priorität: 01.06.2015 DE 102015210068
(43) Veröffentlichungstag der Anmeldung: 31.01.2018
(73) Patentinhaber: Siemens Mobility GmbH, 81739 München (DE)
(72) Erfinder: HILDEBRANDT, Alexander, 44789 Bochum (DE); KARSCHNIA, Christoph, 47506 Neukirchen-Vluyn (DE)
(86) Internationale Anmeldenummer: PCT/EP2016/059810
(87) Internationale Veröffentlichungsnummer: WO 2016/192912

(56) Entgegenhaltungen:
- WO-A1-2013/160070
- DE-T5-112012 006 745
- JP-A- H0 218 157

## Beschreibung

Die Erfindung bezieht sich auf eine Klimatisierungseinrichtung mit einem Wärmeübertrager auf einer Niederdruckseite der Klimatisierungseinrichtung und einem Wärmeübertrager auf einer Hochdruckseite der Klimatisierungseinrichtung, wobei ein in einem Kühlkreislauf der Klimatisierungseinrichtung befindliches Kühlmedium auf der Hochdruckseite unter einem höheren Druck als auf der Niederdruckseite steht, wobei der Wärmeübertrager auf der Niederdruckseite in einem ersten Gehäuseabschnitt der Klimatisierungseinrichtung und der Wärmeübertrager auf der Hochdruckseite in einem zweiten Gehäuseabschnitt der Klimatisierungseinrichtung angeordnet ist.

Eine solche Klimatisierungseinrichtung ist beispielsweise aus der DE 11 2012 006745 T5 bekannt. Danach wird im Falle eines Brandes die Klimatisierungseinrichtung gestoppt und die Lüftungseinrichtung desselben Wagens weiterbetrieben, wobei die Klimatisierungseinrichtung und die Lüftungseinrichtung der benachbarten Wagen gestoppt werden.

In Schienenfahrzeugen zur Personenbeförderung müssen sowohl im Fern- als auch im Nahverkehr hohe Anforderungen an den Brandschutz erfüllt werden. Dazu ist es insbesondere notwendig, dass im Brandfall der im Fahrzeug entstehende hochtoxische Brandrauch schnellstens nach außen abgeführt wird, um die Überlebenswahrscheinlichkeit der im Fahrzeug befindlichen Personen zu erhöhen. Für eine schnelle Entrauchung sind hohe Luftvolumenströme notwendig.

Bisher werden in Schienenfahrzeugen im Brandfalle die Zulüfter der Klimaanlagen auf der Niederdruckseite ausgeschaltet und die Fortlüfter (sofern vorhanden) auf der Niederdruckseite auf maximale Drehzahl geregelt. In Schienenfahrzeugen ohne Fortlüfter verlässt man auf sich Klappfenster und das Öffnen von Türen. Das Öffnen von Türen kann auch eine ergänzende Maßnahme in Schienenfahrzeugen mit Fortlüfter sein.

Der Erfindung liegt die Aufgabe zugrunde, eine für den Brandfall im Vergleich zu herkömmlichen Klimatisierungseinrichtungen verbesserte Klimatisierungseinrichtung anzugeben.

Diese Aufgabe wird erfindungsgemäß durch eine Klimatisierungseinrichtung mit den Merkmalen gemäß Patentanspruch 1 gelöst. Vorteilhafte Ausgestaltungen der erfindungsgemäßen Klimatisierungseinrichtung sind in Unteransprüchen angegeben.

Danach ist erfindungsgemäß vorgesehen, dass zwischen dem ersten und zweiten Gehäuseabschnitt eine Entrauchungsöffnung angeordnet ist, die im Normalbetrieb der Klimatisierungseinrichtung geschlossen ist und im Brandfalle geöffnet werden kann und eine Luftströmung von dem ersten in den zweiten Gehäuseabschnitt ermöglichen kann.

Ein wesentlicher Vorteil der erfindungsgemäßen Klimatisierungseinrichtung ist darin zu sehen, dass - im Brandfalle - ein Absaugen von Brandgasen bzw. Rauch aus dem mit der Klimatisierungseinrichtung vor dem Brand klimatisierten Innenraum, beispielsweise dem Fahrgastraum eines Schienenfahrzeugs, mit Hilfe des auf der Hochdruckseite bzw. in dem zweiten Gehäuseabschnitt der Klimatisierungseinrichtung üblicherweise vorhandenen Lüfters erfolgen kann; bisher ist dies wegen der baulichen Trennung von Hochdruckseite und Niederdruckseite bei Klimatisierungseinrichtungen nicht möglich. An dieser Stelle setzt die Erfindung an, indem eine im Brandfalle aktivierbare Strömungsverbindung zwischen dem zweiten Gehäuseabschnitt und dem ersten Gehäuseabschnitt und damit eine schaltbare Strömungsverbindung zwischen dem klimatisierten Innenraum und dem zweiten Gehäuseabschnitt geschaffen wird. In der Regel ist der auf der Hochdruckseite von Klimatisierungseinrichtungen zur Kühlung des dort befindlichen Wärmeübertragers befindliche Lüfter sehr leistungsfähig, um eine ausreichende Kühlleistung der Klimatisierungseinrichtung insgesamt zu gewährleisten; auf die Lüfterleistung ebendieses auf der Hochdruckseite der Klimatisierungseinrichtung befindlichen Lüfters kann somit im Brandfalle in vorteilhafter Weise zugegriffen werden.
Mit Blick auf den Normalbetrieb der Klimatisierungseinrichtung wird es als vorteilhaft angesehen, wenn der erste Gehäuseabschnitt eine Frischluftöffnung zum Einleiten von Frischluft in den ersten Gehäuseabschnitt und eine Innenraumöffnung aufweist, die zum Einleiten der von dem in dem ersten Gehäuseabschnitt befindlichen Wärmeübertrager gekühlten Frischluft in einen von der Klimatisierungseinrichtung zu klimatisierenden Innenraum dient.
Der zweite Gehäuseabschnitt weist vorzugsweise eine Zuluftöffnung zum Einleiten von Zuluft in den zweiten Gehäuseabschnitt und eine Ablüftöffnung zum Ausblasen der von dem in dem zweiten Gehäuseabschnitt befindlichen Wärmeübertrager erwärmten Zuluft aus dem zweiten Gehäuseabschnitt heraus nach außen auf.
Der zweite Gehäuseabschnitt ist bevorzugt mit einem Lüfter ausgestattet oder steht bevorzugt mit einem solchen in Verbindung, der im Normalbetrieb der Klimatisierungseinrichtung Zuluft durch die Zuluftöffnung in den zweiten Gehäuseabschnitt saugt und die von dem in dem zweiten Gehäuseabschnitt befindlichen Wärmeübertrager erwärmte Zuluft nach außen ausbläst. Im Brandfalle - bei geöffneter Entrauchungsöffnung - saugt der Lüfter zusätzlich Innenraumluft durch die Innenraumöffnung in den ersten Gehäuseabschnitt und von diesem durch die Entrauchungsöffnung hindurch in den zweiten Gehäuseabschnitt und bläst sie von letztgenanntem durch die Abluftöffnung nach außen aus. Vorzugsweise weist die Klimatisierungseinrichtung eine Steuereinrichtung auf, die derart ausgestaltet ist, dass sie bei Vorliegen eines einen Brand signalisierenden Warnsignals ein Steuersignal erzeugt, mit dem sie die Entrauchungsöffnung öffnet.
Besonders vorteilhaft ist es, wenn die Entrauchungsöffnung mit einem betätigbaren Verschlusselement ausgestattet ist, das im Ausgangszustand die Entrauchungsöffnung verschließt und bei Anliegen eines Betätigungssignals freigibt, und die Steuereinrichtung derart ausgestaltet ist, dass sie bei Vorliegen des Warnsignals als Steuersignal das Betätigungssignal zum Betätigen des Verschlusselements erzeugt.

Mit Blick auf eine möglichst schnelle Freigabe der Luftstromverbindung zwischen den Gehäuseabschnitten ist es von Vorteil, wenn das Verschlusselement ein pyrotechnisch arbeitendes Verschlusselement ist, dessen pyrotechnischer Antrieb bei Anliegen des Betätigungssignals gezündet wird.

Um eine möglich große Absaugleistung von Rauch oder Brandgas aus dem (vor dem Brand klimatisierten) Innenraum, beispielsweise Fahrgastinnenraum, zu ereichen, wird es als vorteilhaft angesehen, wenn die Steuereinrichtung derart ausgestaltet ist, dass sie bei Vorliegen des Warnsignals außerdem die Zuluftöffnung oder die Frischluftöffnung verschließt.

Besonders vorteilhaft ist es mit Blick auf eine maximale Absaugwirkung, wenn die Steuereinrichtung derart ausgestaltet ist, dass sie bei Vorliegen des Warnsignals die Entrauchungsöffnung öffnet und sowohl die Frischluftöffnung als auch die Zuluftöffnung verschließt.

Die Erfindung bezieht sich darüber hinaus auf ein Fahrzeug, insbesondere Schienenfahrzeug, das mit einer Klimatisierungseinrichtung, wie sie oben erläutert worden ist, ausgestattet ist. Bezüglich der Vorteile des erfindungsgemäßen Fahrzeugs sei auf die obigen Ausführungen im Zusammenhang mit der erfindungsgemäßen Klimatisierungseinrichtung verwiesen. Die Klimatisierungseinrichtung klimatisiert im Normalbetrieb den Fahrzeuginnenraum und entraucht im Brandfalle den Fahrzeuginnenraum zumindest auch über die Entrauchungsöffnung.

Die Erfindung bezieht sich darüber hinaus auf ein Verfahren zum Betreiben einer Klimatisierungseinrichtung, die einen Wärmeübertrager auf einer Niederdruckseite der Klimatisierungseinrichtung und einen Wärmeübertrager auf einer Hochdruckseite der Klimatisierungseinrichtung aufweist, wobei ein in einem Kühlkreislauf der Klimatisierungseinrichtung befindliches Kühlmedium auf der Hochdruckseite unter einen höheren Druck als auf der Niederdruckseite gesetzt wird.

Bezüglich eines solchen Verfahrens ist erfindungsgemäß vorgesehen, dass der Wärmeübertrager auf der Niederdruckseite in einem ersten Gehäuseabschnitt der Klimatisierungseinrichtung und der Wärmeübertrager auf der Hochdruckseite in einem zweiten Gehäuseabschnitt der Klimatisierungseinrichtung angeordnet ist und zwischen dem ersten und zweiten Gehäuseabschnitt eine Entrauchungsöffnung angeordnet ist, die im Normalbetrieb der Klimatisierungseinrichtung geschlossen ist und im Brandfalle geöffnet wird, wodurch eine Luftströmung von dem ersten in den zweiten Gehäuseabschnitt ermöglicht wird.

Bezüglich der Vorteile des erfindungsgemäßen Verfahrens sei auf die obigen Ausführungen im Zusammenhang mit der erfindungsgemäßen Klimatisierungseinrichtung verwiesen, da die Vorteile des erfindungsgemäßen Verfahrens denen der erfindungsgemäßen Klimatisierungseinrichtung im Wesentlichen entsprechen.

Die Erfindung wird nachfolgend anhand von Ausführungsbeispielen näher erläutert; dabei zeigen beispielhaft:

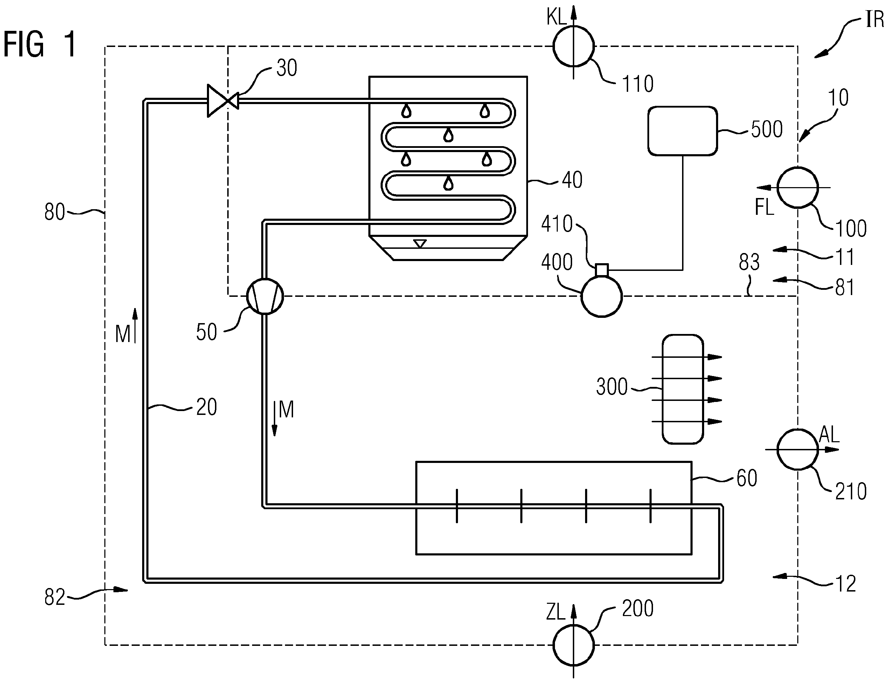

- Figur 1: ein Ausführungsbeispiel für eine Klimatisierungseinrichtung, die bei einem Fahrzeug, insbesondere Schienenfahrzeug, eingesetzt werden kann, wobei die Figur 1 die Arbeitsweise während des Normalbetriebs zeigt,

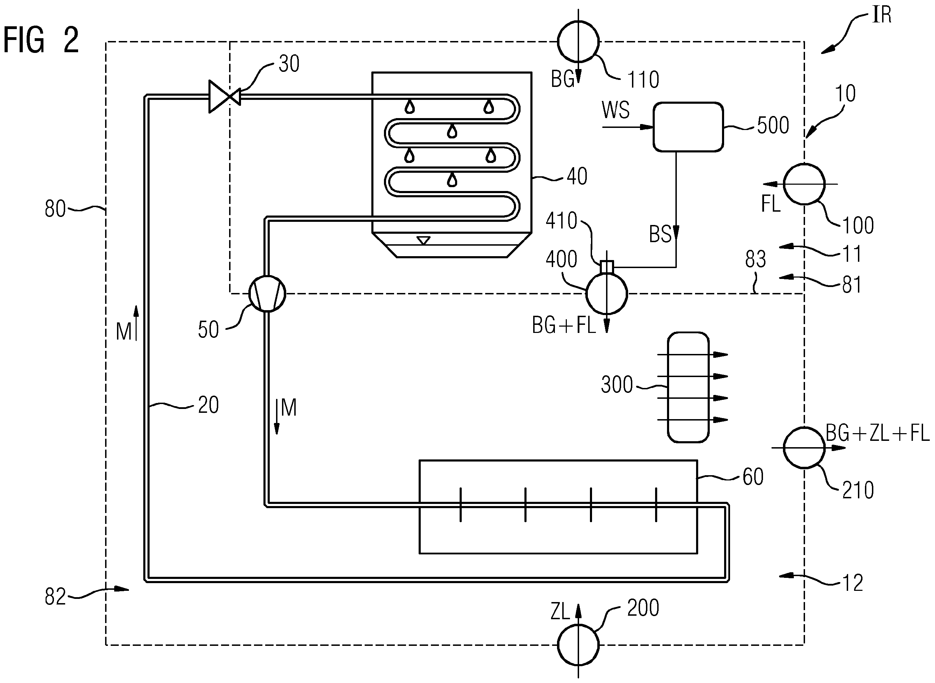

- Figur 2: das Ausführungsbeispiel gemäß Figur 1 im Falle eines Brandes,

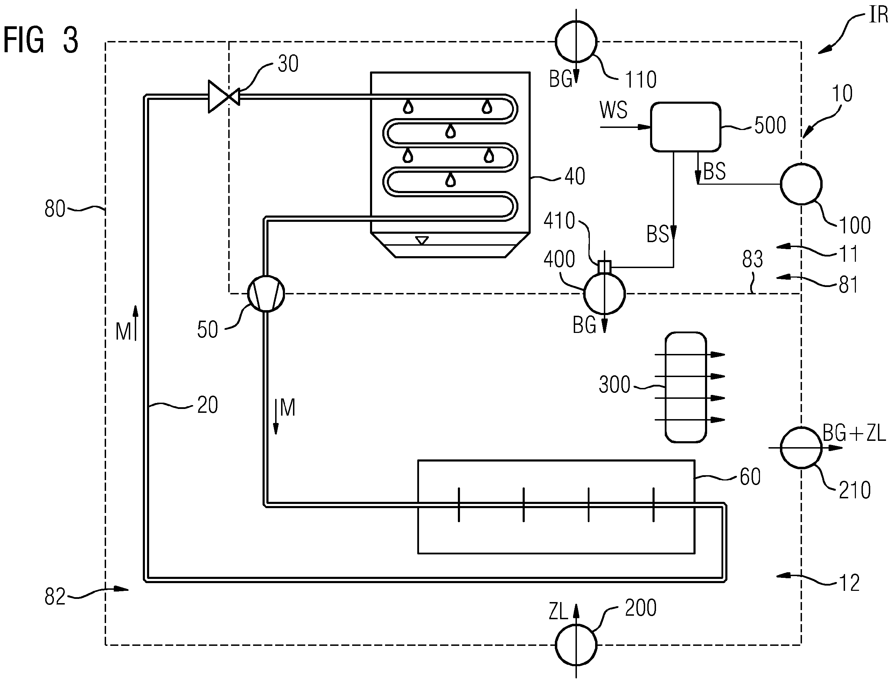

- Figur 3: ein Ausführungsbeispiel für eine Klimatisierungseinrichtung, die bei einem Fahrzeug, insbesondere Schienenfahrzeug, eingesetzt werden kann und eine Steuereinrichtung aufweist, die im Falle eines Brandes eine Entrauchungsöffnung zwischen der Niederdruckseite und der Hochdruckseite der Klimatisierungseinrichtung öffnet und außerdem eine Frischluftöffnung auf der Niederdruckseite schließt,

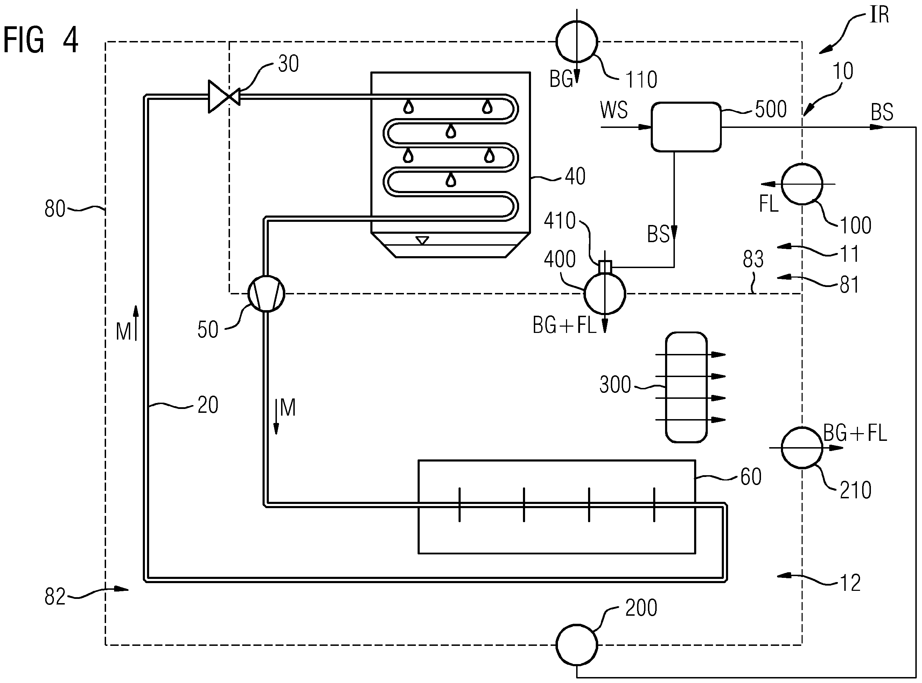

- Figur 4: ein Ausführungsbeispiel für eine Klimatisierungseinrichtung, die bei einem Fahrzeug, insbesondere Schienenfahrzeug, eingesetzt werden kann und eine Steuereinrichtung aufweist, die im Falle eines Brandes eine Entrauchungsöffnung zwischen der Niederdruckseite und der Hochdruckseite der Klimatisierungseinrichtung öffnet und außerdem eine Zuluftöffnung auf der Hochdruckseite schließt,

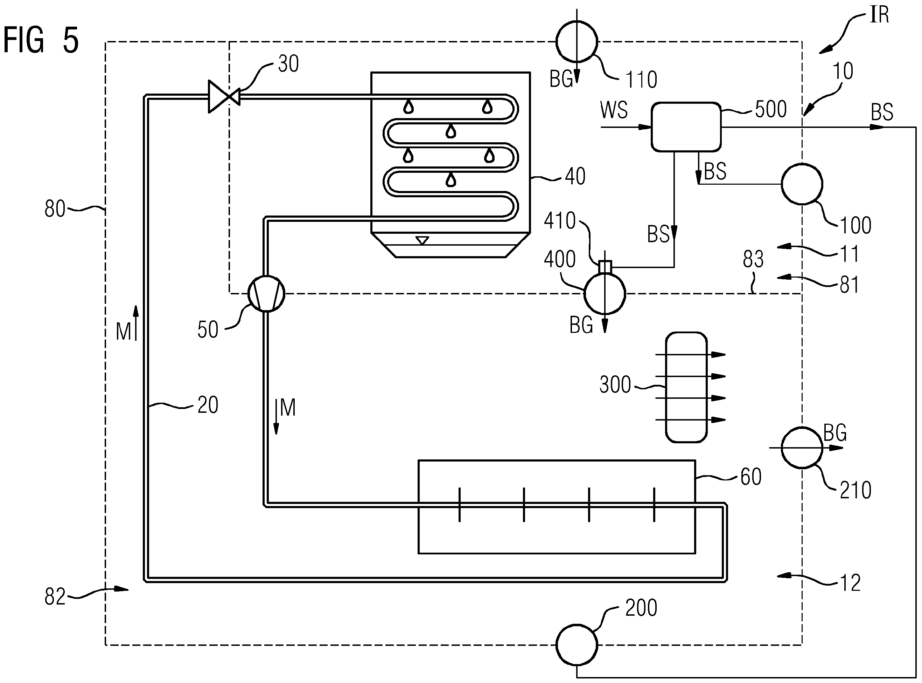

- Figur 5: ein Ausführungsbeispiel für eine Klimatisierungseinrichtung, die bei einem Fahrzeug, insbesondere Schienenfahrzeug, eingesetzt werden kann und eine Steuereinrichtung aufweist, die im Falle eines Brandes eine Entrauchungsöffnung zwischen der Niederdruckseite und der Hochdruckseite der Klimatisierungseinrichtung öffnet und eine Frischluftöffnung auf der Niederdruckseite sowie eine Zuluftöffnung auf der Hochdruckseite schließt, und

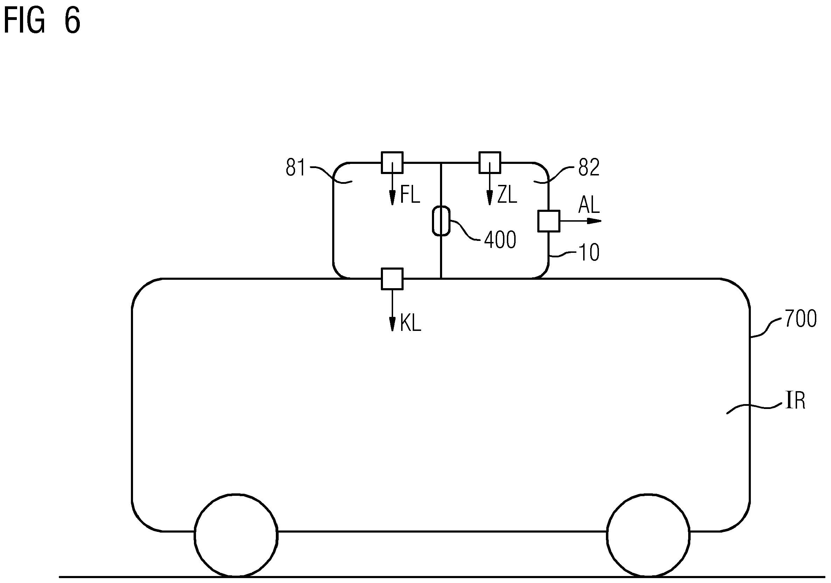

- Figur 6: ein Ausführungsbeispiel für ein erfindungsgemäßes Schienenfahrzeug, das mit einer erfindungsgemäßen Klimatisierungseinrichtung ausgestattet ist.

In den Figuren werden der Übersicht halber für identische oder vergleichbare Komponenten stets dieselben Bezugszeichen verwendet.

Die Figur 1 zeigt eine Klimatisierungseinrichtung 10, die mit einem ein Kühlmedium M führenden Kühlkreislauf 20 ausgestattet ist. Der Kühlkreislauf 20 umfasst neben nur schematisch dargestellten Leitungen zum Führen des Kühlmediums M ein Expansionsventil 30, einen ersten Wärmeübertrager 40, einen Kompressor 50 sowie einen zweiten Wärmeübertrager 60.

Das Expansionsventil 30 und der Kompressor 50 unterteilen die Klimatisierungseinrichtung 10 druckmäßig in eine Niederdruckseite 11 und eine Hochdruckseite 12. Der erste Wärmeübertrager 40 ist auf der Niederdruckseite 11 der Klimatisierungseinrichtung 10 und der zweite Wärmeübertrager 60 auf der Hochdruckseite 12 angeordnet.

Die Klimatisierungseinrichtung 10 weist bei dem Ausführungsbeispiel gemäß Figur 1 ein Gehäuse 80 auf, das einen ersten Gehäuseabschnitt 81 und einen zweiten Gehäuseabschnitt 82 umfasst. Der erste Gehäuseabschnitt 81 ist von dem zweiten Gehäuseabschnitt 82 durch eine Trennwand 83 getrennt. Die Niederdruckseite 11 der Klimatisierungseinrichtung 10 befindet sich in dem ersten Gehäuseabschnitt 81 des Gehäuses 80 und die Hochdruckseite 12 in dem zweiten Gehäuseabschnitt 82.

Der erste Gehäuseabschnitt 81 weist eine Frischluftöffnung 100 zum Einleiten von Frischluft FL in den ersten Gehäuseabschnitt 81 auf. Außerdem umfasst der erste Gehäuseabschnitt 81 eine Innenraumöffnung 110 zum Einleiten der vom Wärmeübertrager 40 gekühlten Frischluft KL in einen Innenraum IR, der von der Klimatisierungseinrichtung 10 zu klimatisieren ist. Bei dem zu klimatisierenden Innenraum IR kann es sich beispielsweise um einen Fahrzeuginnenraum eines Fahrzeugs, insbesondere eines Schienenfahrzeugs, handeln.

Der zweite Gehäuseabschnitt 82 umfasst eine Zuluftöffnung 200 zum Einleiten von Zuluft ZL in den zweiten Gehäuseabschnitt 82 und eine Ablüftöffnung 210 zum Ausblasen der von dem Wärmeübertrager 60 erwärmten Zuluft, die nachfolgend als Abluft AL bezeichnet wird, aus dem zweiten Gehäuseabschnitt 82 heraus nach außen.

Bei der Zuluft ZL und der Frischluft FL kann es sich beispielsweise um Außenluft bzw. Umgebungsluft handeln, die von außen bzw. aus der Umgebung der Klimatisierungseinrichtung 10 eingeleitet wird.

Der zweite Gehäuseabschnitt 82 ist mit einem Lüfter 300 ausgestattet, der im Normalbetrieb der Klimatisierungseinrichtung 80 die Zuluft ZL durch die Zuluftöffnung 200 in den zweiten Gehäuseabschnitt 82 hineinsaugt, an dem Wärmeübertrager 60 vorbeileitet und die von dem Wärmeübertrager 60 erwärmte Luft als Abluft AL nach außen ausbläst.

Zwischen dem ersten und dem zweiten Gehäuseabschnitt 81 bzw. 82 ist eine Entrauchungsöffnung 400 angeordnet, die im Normalbetrieb der Klimatisierungseinrichtung 80 geschlossen ist und - wie weiter unten noch näher erläutert wird - im Brandfalle geöffnet werden kann, wodurch eine Luftströmung von dem ersten in den zweiten Gehäuseabschnitt ermöglicht wird.

Die Entrauchungsöffnung 400 ist mit einem betätigbaren Verschlusselement 410 ausgestattet ist, das im Ausgangszustand die Entrauchungsöffnung 400 verschließt und diese erst bei Anliegen eines Betätigungssignals BS (vgl. Figur 2) freigibt. Zur Ansteuerung der Entrauchungsöffnung 400 bzw. des Verschlusselements 410 ist das Verschlusselement 410 mit einer Steuereinrichtung 500 verbunden.

Bei dem Verschlusselement 410 kann es sich um eine mechanisch verstellbare, insbesondere verschwenkbare Klappe handeln. Mit Blick auf ein möglichst schnelles und sicheres Öffnen der Entrauchungsöffnung 400 wird es als vorteilhaft angesehen, wenn das Verschlusselement 410 einen pyrotechnischer Antrieb aufweist, der bei Anliegen des Betätigungssignals BS gezündet wird und das Öffnen der Entrauchungsöffnung 400 pyrotechnisch hervorruft.

Die Steuereinrichtung 500 ist derart ausgestaltet, dass sie bei Vorliegen eines einen Brand signalisierenden Warnsignals WS das Betätigungssignal BS (vgl. Figur 2) erzeugt, mit dem das Verschlusselement 410 betätigt und die Entrauchungsöffnung 400 geöffnet wird. Das Warnsignal WS kann von einem aus Gründen der Übersicht in der Figur 1 nicht gezeigten Brandmelder geliefert werden, der mit der Steuereinrichtung 500 in Verbindung steht.

Die Klimatisierungseinrichtung 10 wird vorzugsweise wie folgt betrieben:
Im Normalbetrieb (vgl. Figur 1) wird Frischluft FL durch Ansaugen mittels eines aus Gründen der Übersicht nicht gezeigten Lüfters oder durch Einblasen, beispielsweise in Form von Fahrtwind im Falle eines Einsatzes der Klimatisierungseinrichtung 10 in oder an einem Fahrzeug, in den ersten Gehäuseabschnitt 81 der Klimatisierungseinrichtung 10 eingeführt, dort mit dem Wärmeübertrager 40 gekühlt und anschließend als gekühlte Frischluft KL in den Innenraum IR, beispielsweise einen Fahrzeuginnenraum, geleitet.

Zur Abfuhr der Wärme des Kühlmediums M wird mit dem Lüfter 300 Zuluft ZL, vorzugsweise Umgebungsluft, angesaugt und an dem Wärmeübertrager 60 vorbeigeleitet, wodurch die vorbeigeleitete Luft erwärmt und der Wärmeübertrager 60 gekühlt wird. Die erwärmte Luft wird als Abluft AL durch die Ablüftöffnung 210 ausgeblasen.

Im Falle eines Brandes (vgl. Figur 2) wird von dem erwähnten Brandmelder das Warnsignal WS an die Steuereinrichtung 500 übertragen, die daraufhin das Betätigungssignal BS erzeugt. Durch das Betätigungssignal BS wird das Verschlusselement 410 aktiviert und die Entrauchungsöffnung 400 geöffnet. Durch das Öffnen der Entrauchungsöffnung 400 wird der in der Regel sehr leistungsfähige Lüfter 300 Luft aus dem ersten Gehäuseabschnitt 81 absaugen, wodurch dort ein Unterdruck entsteht. Durch den Unterdruck im ersten Gehäuseabschnitt 81 wird wiederum Luft, insbesondere Rauch bzw. Brandgas BG, aus dem Innenraum IR durch die Innenraumöffnung 110 angesaugt und durch die Ablüftöffnung 210 ausgeblasen. Der Lüfter 300 arbeitet somit als Rauchabzugseinrichtung für den Innenraum IR.

Die Figur 3 zeigt eine Klimatisierungseinrichtung 10, bei der die Frischluftöffnung 100 auf der Niederdruckseite 11 mit der Steuereinrichtung 500 in Verbindung steht und von dieser mit dem Betätigungssignal BS geschlossen werden kann.

Im Falle eines Brands wird die Steuereinrichtung 500 das Betätigungssignal BS erzeugen und dadurch die Entrauchungsöffnung 400 zwischen der Niederdruckseite 11 und der Hochdruckseite 12 der Klimatisierungseinrichtung öffnen und die Frischluftöffnung 100 schließen.

Im Unterschied zu dem Ausführungsbeispiel gemäß den Figuren 1 und 2 wird bei dem Ausführungsbeispiel gemäß Figur 3 ein Einströmen von Frischluft FL - im Falle eines Brandes - in den ersten Gehäuseabschnitt 81 unterbunden, wodurch der Wirkungsgrad des Lüfters 300 im zweiten Gehäuseabschnitt 82 bezüglich des Absaugens von Rauch bzw. Brandgas BG aus dem Innenraum IR größer als bei dem Ausführungsbeispiel gemäß den Figuren 1 und 2 ist.

Im Übrigen sei bezüglich der Funktionsweise der Klimatisierungseinrichtung 10 gemäß Figur 3 auf die obigen Ausführungen im Zusammenhang mit dem Ausführungsbeispiel gemäß den Figuren 1 und 2 verwiesen, da diese für die Klimatisierungseinrichtung 10 gemäß Figur 3 entsprechend gelten.

Die Figur 4 zeigt eine Klimatisierungseinrichtung 10, bei der die Zuluftöffnung 200 auf der Hochdruckseite 12 mit der Steuereinrichtung 500 in Verbindung steht und von dieser mit dem Betätigungssignal BS geschlossen werden kann.

Im Falle eines Brands wird die Steuereinrichtung 500 das Betätigungssignal BS erzeugen und dadurch die Entrauchungsöffnung 400 zwischen der Niederdruckseite 11 und der Hochdruckseite 12 der Klimatisierungseinrichtung öffnen und die Zuluftöffnung 200 schließen.

Im Unterschied zu dem Ausführungsbeispiel gemäß den Figuren 1 und 2 wird bei dem Ausführungsbeispiel gemäß Figur 4 im Falle eines Brandes ein Einströmen von Zuluft ZL in den zweiten Gehäuseabschnitt 82 unterbunden, wodurch der Wirkungsgrad des Lüfters 300 im zweiten Gehäuseabschnitt 82 bezüglich des Absaugens von Rauch bzw. Brandgas BG aus dem Innenraum IR größer als bei dem Ausführungsbeispiel gemäß den Figuren 1 und 2 ist.

Im Übrigen sei bezüglich der Funktionsweise der Klimatisierungseinrichtung 10 gemäß Figur 4 auf die obigen Ausführungen im Zusammenhang mit dem Ausführungsbeispiel gemäß den Figuren 1 und 2 verwiesen, da diese für die Klimatisierungseinrichtung 10 gemäß Figur 4 entsprechend gelten.

Die Figur 5 zeigt eine Klimatisierungseinrichtung 10, bei der sowohl die Zuluftöffnung 200 auf der Hochdruckseite 12 als auch die Frischluftöffnung 100 auf der Niederdruckseite 11 mit der Steuereinrichtung 500 in Verbindung stehen und von dieser mit dem Betätigungssignal BS geschlossen werden können.

Im Falle eines Brands wird die Steuereinrichtung 500 das Betätigungssignal BS erzeugen und dadurch die Entrauchungsöffnung 400 zwischen der Niederdruckseite 11 und der Hochdruckseite 12 der Klimatisierungseinrichtung öffnen. Gleichzeitig, davor oder danach, wird sie die Frischluftöffnung 100 und die Zuluftöffnung 200 schließen.

Im Unterschied zu dem Ausführungsbeispiel gemäß den Figuren 1 und 2 werden bei dem Ausführungsbeispiel gemäß Figur 5 im Falle eines Brandes ein Einströmen von Zuluft ZL in den zweiten Gehäuseabschnitt 82 sowie ein Einströmen von Frischluft FL in den ersten Gehäuseabschnitt 81 unterbunden, wodurch der Wirkungsgrad des Lüfters 300 im zweiten Gehäuseabschnitt 82 bezüglich des Absaugens von Rauch bzw. Brandgas BG aus dem Innenraum IR größer als bei dem Ausführungsbeispiel gemäß den Figuren 1 und 2 ist.

Im Übrigen sei bezüglich der Funktionsweise der Klimatisierungseinrichtung 10 gemäß Figur 5 auf die obigen Ausführungen im Zusammenhang mit dem Ausführungsbeispiel gemäß den Figuren 1 und 2 verwiesen, da diese für die Klimatisierungseinrichtung 10 gemäß Figur 5 entsprechend gelten.

Die Figur 6 zeigt ein Ausführungsbeispiel für ein Schienenfahrzeug 700, das mit einer Klimatisierungseinrichtung 10 ausgestattet ist. Die Klimatisierungseinrichtung 10 dient dazu, im Normalbtrieb Frischluft FL zu kühlen und ausgangsseitig gekühlte Luft KL in den Innenraum IR des Schienenfahrzeugs 700 einzuspeisen.

Die Klimatisierungseinrichtung 10 gemäß Figur 6 entspricht vorzugsweise einer der im Zusammenhang mit den Figuren 1 bis 5 oben im Detail erläuterten Klimatisierungseinrichtungen. Bezüglich der Klimatisierungseinrichtung 10, insbesondere der Arbeitsweise der Klimatisierungseinrichtung 10 im Brandfalle, kann somit auf die obigen Ausführungen im Zusammenhang mit den Figuren 1 bis 5 verwiesen werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Klimatisierungseinrichtung (10) mit einem Wärmeübertrager (40) auf einer Niederdruckseite (11) der Klimatisierungseinrichtung (10) und einem Wärmeübertrager (60) auf einer Hochdruckseite (12) der Klimatisierungseinrichtung (10), wobei ein in einem Kühlkreislauf (20) der Klimatisierungseinrichtung (10) befindliches Kühlmedium (M) auf der Hochdruckseite (12) unter einem höheren Druck als auf der Niederdruckseite (11) steht, wobei
der Wärmeübertrager (40) auf der Niederdruckseite (11) in einem ersten Gehäuseabschnitt (81) der Klimatisierungseinrichtung (10) und der Wärmeübertrager (60) auf der Hochdruckseite (12) in einem zweiten Gehäuseabschnitt (82) der Klimatisierungseinrichtung (10) angeordnet ist,
**dadurch gekennzeichnet, dass**
- zwischen dem ersten und zweiten Gehäuseabschnitt (81, 82) eine Entrauchungsöffnung (400) angeordnet ist, die im Normalbetrieb der Klimatisierungseinrichtung (10) geschlossen ist und im Brandfalle geöffnet werden kann und eine Luftströmung von dem ersten in den zweiten Gehäuseabschnitt (81, 82) ermöglichen kann.

2. Klimatisierungseinrichtung (10) nach Anspruch 1,
**dadurch gekennzeichnet, dass**
der erste Gehäuseabschnitt (81) eine Frischluftöffnung (100) zum Einleiten von Frischluft (FL) in den ersten Gehäuseabschnitt (81) und eine Innenraumöffnung (110) zum Einleiten der von dem in dem ersten Gehäuseabschnitt (81) befindlichen Wärmeübertrager (40) gekühlten Frischluft (FL) in einen von der Klimatisierungseinrichtung (10) zu klimatisierenden Innenraum (IR) aufweist.

3. Klimatisierungseinrichtung (10) nach einem der voranstehenden Ansprüche,
**dadurch gekennzeichnet, dass**
- der zweite Gehäuseabschnitt (82) eine Zuluftöffnung (200) zum Einleiten von Zuluft (ZL) in den zweiten Gehäuseabschnitt (82) und eine Abluftöffnung (210) zum Ausblasen der von dem in dem zweiten Gehäuseabschnitt (82) befindlichen Wärmeübertrager (60) erwärmten Zuluft (ZL) aus dem zweiten Gehäuseabschnitt (82) heraus nach außen aufweist.

4. Klimatisierungseinrichtung (10) nach einem der voranstehenden Ansprüche,
**dadurch gekennzeichnet, dass**
der zweite Gehäuseabschnitt (82) mit einem Lüfter (300) ausgestattet ist oder mit einem solchen in Verbindung steht, der
- im Normalbetrieb der Klimatisierungseinrichtung (10) Zuluft (ZL) durch die Zuluftöffnung (200) in den zweiten Gehäuseabschnitt (82) saugt und die von dem in dem zweiten Gehäuseabschnitt (82) befindlichen Wärmeübertrager (60) erwärmte Zuluft (ZL) nach außen ausbläst und
- im Brandfalle bei geöffneter Entrauchungsöffnung (400) zusätzlich Innenraumluft durch die Innenraumöffnung (110) in den ersten Gehäuseabschnitt (81), von diesem durch die Entrauchungsöffnung (400) hindurch in den zweiten Gehäuseabschnitt (82) und von letztgenanntem durch die Abluftöffnung (210) nach außen ausbläst.

5. Klimatisierungseinrichtung (10) nach einem der voranstehenden Ansprüche,
**dadurch gekennzeichnet, dass**
die Klimatisierungseinrichtung (10) eine Steuereinrichtung (500) aufweist, die derart ausgestaltet ist, dass sie bei Vorliegen eines einen Brand signalisierenden Warnsignals (WS) ein Steuersignal erzeugt, mit dem sie die Entrauchungsöffnung (400) öffnet.

6. Klimatisierungseinrichtung (10) nach einem der voranstehenden Ansprüche,
**dadurch gekennzeichnet, dass**
- die Entrauchungsöffnung (400) mit einem betätigbaren Verschlusselement (410) ausgestattet ist, das im Ausgangszustand die Entrauchungsöffnung (400) verschließt und bei Anliegen eines Betätigungssignals (BS) freigibt, und
- die Steuereinrichtung (500) derart ausgestaltet ist, dass sie bei Vorliegen des Warnsignals (WS) als Steuersignal das Betätigungssignal (BS) zum Betätigen des Verschlusselements (410) erzeugt.

7. Klimatisierungseinrichtung (10) nach Anspruch 6,
**dadurch gekennzeichnet, dass**
das Verschlusselement (410) ein pyrotechnisch arbeitendes Verschlusselement (410) ist, dessen pyrotechnischer Antrieb bei Anliegen des Betätigungssignals (BS) gezündet wird.

8. Klimatisierungseinrichtung (10) nach einem der voranstehenden Ansprüche,
**dadurch gekennzeichnet, dass**
die Steuereinrichtung (500) derart ausgestaltet ist, dass sie bei Vorliegen des Warnsignals (WS) die Zuluftöffnung (200) verschließt.

9. Klimatisierungseinrichtung (10) nach einem der voranstehenden Ansprüche,
**dadurch gekennzeichnet, dass**
die Steuereinrichtung (500) derart ausgestaltet ist, dass sie bei Vorliegen des Warnsignals (WS) die Frischluftöffnung (100) verschließt.

10. Klimatisierungseinrichtung (10) nach einem der voranstehenden Ansprüche,
**dadurch gekennzeichnet, dass**
die Steuereinrichtung (500) derart ausgestaltet ist, dass sie bei Vorliegen des Warnsignals (WS) die Entrauchungsöffnung (400) öffnet und sowohl die Frischluftöffnung (100) als auch die Zuluftöffnung (200) verschließt.

11. Fahrzeug, insbesondere Schienenfahrzeug (500),
**dadurch gekennzeichnet, dass**
das Fahrzeug mit einer Klimatisierungseinrichtung (10) nach einem der voranstehenden Ansprüche ausgestattet ist und
die Klimatisierungseinrichtung (10) im Normalbetrieb den Fahrzeuginnenraum (IR) klimatisiert und im Brandfalle den Fahrzeuginnenraum (IR) zumindest auch über die Entrauchungsöffnung (400) entraucht.

12. Verfahren zum Betreiben einer Klimatisierungseinrichtung (10), die einen Wärmeübertrager (40) auf einer Niederdruckseite (11) der Klimatisierungseinrichtung (10) und einen Wärmeübertrager (60) auf einer Hochdruckseite (12) der Klimatisierungseinrichtung (10) aufweist, wobei ein in einem Kühlkreislauf (20) der Klimatisierungseinrichtung (10) befindliches Kühlmedium (M) auf der Hochdruckseite (12) unter einen höheren Druck als auf der Niederdruckseite (11) gesetzt wird, **dadurch gekennzeichnet, dass**
- der Wärmeübertrager (40) auf der Niederdruckseite (11) in einem ersten Gehäuseabschnitt (81) der Klimatisierungseinrichtung (10) und der Wärmeübertrager (60) auf der Hochdruckseite (12) in einem zweiten Gehäuseabschnitt (82) der Klimatisierungseinrichtung (10) angeordnet ist und
- zwischen dem ersten und zweiten Gehäuseabschnitt (81, 82) eine Entrauchungsöffnung (400) angeordnet ist, die im Normalbetrieb der Klimatisierungseinrichtung (10) geschlossen ist und im Brandfalle geöffnet wird, wodurch eine Luftströmung von dem ersten in den zweiten Gehäuseabschnitt (81, 82) ermöglicht wird.

## Claims

1. Air-conditioning device (10) having a heat exchanger (40) at a low-pressure side (11) of the air-conditioning device (10) and a heat exchanger (60) at a high-pressure side (12) of the air-conditioning device (10), wherein a cooling medium (M) which is located in a cooling circuit (20) of the air-conditioning device (10) at the high-pressure side (12) is under a higher pressure than at the low-pressure side (11), wherein the heat exchanger (40) at the low-pressure side (11) is arranged in a first housing portion (81) of the air-conditioning device (10) and the heat exchanger (60) at the high-pressure side (12) is arranged in a second housing portion (82) of the air-conditioning device,
**characterized in that**
- there is arranged between the first and second housing portions (81, 82) a smoke removal opening (400) which is closed during normal operation of the air conditioning device (10) and which can be opened in the event of a fire and which can enable an air flow from the first housing portion into the second housing portion (81, 82).

2. Air-conditioning device (10) according to Claim 1,
**characterized in that**
the first housing portion (81) has a fresh air opening (100) for introducing fresh air (FL) into the first housing portion (81) and an inner space opening (110) for introducing the fresh air (FL) which has been cooled by the heat exchanger (40) located in the first housing portion (81) into an inner space (IR) which is intended to be air-conditioned by the air-conditioning device (10).

3. Air-conditioning device (10) according to one of the preceding claims,
**characterized in that**
- the second housing portion (82) has a supply air opening (200) for introducing supply air (ZL) into the second housing portion (82) and an exhaust air opening (210) for blowing out the supply air (ZL) which has been heated by the heat exchanger (60) located in the second housing portion (82) from the second housing portion (82) in an outward direction.

4. Air-conditioning device (10) according to one of the preceding claims,
**characterized in that**
the second housing portion (82) is provided with a fan (300) or is connected to a fan which
- during normal operation of the air-conditioning device (10) draws supply air (ZL) through the supply air opening (200) into the second housing portion (82) and which blows out the supply air (ZL) which has been heated by the heat exchanger (60) located in the second housing portion (82) in an outward direction and
- which in the event of a fire with the smoke removal opening (400) open additionally draws inner space air through the inner space opening (110) into the first housing portion (81), from this housing portion through the smoke removal opening (400) into the second housing portion (82) and blows it from that location outward through the exhaust air opening (210).

5. Air-conditioning device (10) according to one of the preceding claims,
**characterized in that**
the air-conditioning device (10) has a control device (500) which is configured in such a manner that, when a warning signal (WS) which signals a fire is present, it produces a control signal by means of which it opens the smoke removal opening (400).

6. Air-conditioning device (10) according to one of the preceding claims,
**characterized in that**
- the smoke removal opening (400) is provided with an actuatable closure element (410) which in the initial state closes the smoke removal opening (400) and which releases it when an actuation signal (BS) is present, and
- the control device (500) is constructed in such a manner that, when the warning signal (WS) is present as a control signal, it produces the actuation signal (BS) in order to actuate the closure element (410).

7. Air-conditioning device (10) according to Claim 6,
**characterized in that**
the closure element (410) is a pyrotechnically operating closure element (410) whose pyrotechnical drive is ignited when the actuation signal (BS) is present.

8. Air-conditioning device (10) according to one of the preceding claims,
**characterized in that**
the control device (500) is configured in such a manner that it closes the supply air opening (200) when the warning signal (WS) is present.

9. Air-conditioning device (10) according to one of the preceding claims,
**characterized in that**
the control device (500) is configured in such a manner that it closes the fresh air opening (100) when the warning signal (WS) is present.

10. Air-conditioning device (10) according to one of the preceding claims,
**characterized in that**
the control device (500) is configured in such a manner that it opens the smoke removal opening (400) and closes both the fresh air opening (100) and the supply air opening (200) when the warning signal (WS) is present.

11. Vehicle, in particular rail vehicle (500),
**characterized in that**
the vehicle is provided with an air-conditioning device (10) according to one of the preceding claims and the air-conditioning device (10) air-conditions the vehicle inner space (IR) during normal operation and in the event of a fire removes smoke from the vehicle inner space (IR) at least also via the smoke removal opening (400).

12. Method for operating an air-conditioning device (10) which has a heat exchanger (40) at a low-pressure side (11) of the air-conditioning device (10) and a heat exchanger (60) at a high-pressure side (12) of the air-conditioning device (10), wherein a cooling medium (M) which is located in a cooling circuit (20) of the air-conditioning device (10) is placed under a higher pressure at the high-pressure side (12) than at the low-pressure side (11),
**characterized in that**
- the heat exchanger (40) at the low-pressure side (11) is arranged in a first housing portion (81) of the air-conditioning device (10) and the heat exchanger (60) at the high-pressure side (12) is arranged in a second housing portion (82) of the air-conditioning device (10) and
- between the first and second housing portions (81, 82) there is arranged a smoke removal opening (400) which is closed during normal operation of the air-conditioning device (10) and which is opened in the event of a fire, whereby an air flow is enabled from the first housing portion into the second housing portion (81, 82).

## Revendications

1. Dispositif (10) de conditionnement d'air, comprenant un échangeur de chaleur (40), d'un côté (11) de basse pression, du dispositif (10) de conditionnement d'air et un échangeur de chaleur (60), du côté (12) de haute pression, du dispositif (10) de conditionnement d'air, un fluide (M) de refroidissement se trouvant dans un circuit (20) de refroidissement du dispositif (10) de conditionnement d'air étant, du côté (12) de haute pression, sous une pression plus haute que du côté (11) de basse pression, dans lequel l'échangeur de chaleur (40), du côté (11) de basse pression, est disposé dans une première partie (81) d'enveloppe du dispositif (10) de conditionnement d'air et l'échangeur de chaleur (60), du côté (12) de haute de pression, dans une deuxième partie (82) d'enveloppe du dispositif (10) de conditionnement d'air,
**caractérisé en ce que**
- entre la première et la deuxième parties (81, 82) de l'enveloppe, est prévue une ouverture (400) de défumage, qui est fermée lors que le dispositif (10) de conditionnement d'air fonctionne normalement et qui peut être ouverte en cas d'incendie et peut rendre possible un écoulement d'air de la première à la deuxième partie (81, 82) de l'enveloppe.

2. Dispositif (10) de conditionnement d'air suivant la revendication 1,
**caractérisé en ce que**
la première partie (81) de l'enveloppe a une ouverture (100) pour de l'air frais, pour introduire de l'air (FL) frais dans la première partie (81) de l'enveloppe, et une ouverture (110) d'espace intérieur, pour introduire l'air (FL) frais, refroidi dans l'échangeur de chaleur (40) se trouvant dans la première partie (81) de l'enveloppe, dans un espace (IR) intérieur, dont l'air doit être conditionné par le dispositif (10) de conditionnement d'air.

3. Dispositif (10) de conditionnement d'air suivant l'une des revendications précédentes,
**caractérisé en ce que**
- la deuxième partie (82) de l'enveloppe a une ouverture (200) d'amenée d'air, pour introduire de l'air (ZL) amené dans la deuxième partie (82) de l'enveloppe, et une ouverture (210) d'évacuation d'air, pour refouler de l'air (ZL) amené, réchauffé dans l'échangeur de chaleur (60) se trouvant dans la deuxième partie (82) de l'enveloppe, de la deuxième partie (82) de l'enveloppe à l'extérieur.

4. Dispositif (10) de conditionnement d'air suivant l'une des revendications précédentes
**caractérisé en ce que**
la deuxième partie (82) de l'enveloppe est équipée d'un ventilateur (300) ou est en liaison avec un ventilateur, qui
- lorsque le dispositif (10) de conditionnement d'air est en fonctionnement normal, aspire de l'air (ZL) amené par l'ouverture (200) d'amenée d'air dans la deuxième partie (82) de l'enveloppe et refoule, vers l'extérieur, l'air (ZL) amené, chauffé par l'échangeur de chaleur (60) se trouvant dans la deuxième partie (82) de l'enveloppe et
- en cas d'incendie, alors que l'ouverture (400) de défumage est ouverte, refoule supplémentairement de l'air de l'espace intérieur, par l'ouverture (110) de l'espace intérieur, dans la première partie (80) de l'enveloppe, de celle-ci, par l'ouverture (400) de défumage, dans la deuxième partie (82) de l'enveloppe et de cette dernière, par l'ouverture (210) d'évacuation d'air vers l'extérieur.

5. Dispositif (10) de conditionnement d'air suivant l'une des revendications précédentes,
**caractérisé en ce que**
le dispositif (10) de conditionnement d'air a un dispositif (500) de commande conformé de manière à produire, en présence d'un signal (WS) d'alerte signalant un incendie, un signal de commande, par lequel l'ouverture (400) de défumage s'ouvre.

6. Dispositif (10) de conditionnement d'air suivant l'une des revendications précédentes,
**caractérisé en ce que**
- l'ouverture (400) de défumage est équipée d'un élément (410) de fermeture, qui peut être actionné, qui, à l'état initial, ferme l'ouverture (400) de défumage et qui, en présence d'un signal (BS) d'actionnement, la dégage et
- le dispositif (500) de commande est conformé de manière à produire, en présence du signal (WS) d'alerte, comme signal de commande, le signal (BS) d'actionnement pour actionner l'élément (410) de fermeture.

7. Dispositif (10) de conditionnement d'air suivant la revendication 6,
**caractérisé en ce que**
l'élément (410) de fermeture est un élément (410) de fermeture fonctionnant de manière pyrotechnique, dont l'entraînement pyrotechnique est amorcé en présence du signal (BS) d'actionnement.

8. Dispositif (10) de conditionnement d'air suivant l'une des revendications précédentes,
**caractérisé en ce que**
le dispositif (500) de commande est conformé de manière, en présence du signal (WS) d'alerte, à fermer l'ouverture (200) d'amenée d'air.

9. Dispositif (10) de conditionnement d'air suivant l'une des revendications précédentes,
**caractérisé en ce que**
le dispositif (500) de commande est conformé pour, en présence du signal (WS) d'alerte, fermer l'ouverture (100) pour de l'air frais.

10. Dispositif (10) de conditionnement d'air suivant l'une des revendications précédentes,
**caractérisé en ce que**
le dispositif (500) de commande est conformé pour, en présence du signal (WS) d'alerte, ouvrir l'ouverture (400) de défumage et fermer, à la fois l'ouverture (100) pour de l'air frais et l'ouverture (200) d'amenée d'air.

11. Véhicule, notamment véhicule (500) ferroviaire,
**caractérisé en ce que**
le véhicule est équipé d'un dispositif (10) de conditionnement d'air suivant l'une des revendications précédentes et le dispositif (10) de conditionnement d'air conditionne, en fonctionnement normal, l'air de l'espace (IR) intérieur du véhicule et, en cas d'incendie, fait sortir la fumée de l'espace (IR) intérieur du véhicule, au moins également par l'ouverture (400) de défumage.

12. Procédé pour faire fonctionner un dispositif (110) de conditionnement d'air, qui a un échangeur de chaleur (40), d'un côté (11) de basse pression, du dispositif (10) de conditionnement d'air, et un échangeur de chaleur (60), du côté (12) de haute pression, du dispositif (10) de conditionnement d'air, un fluide (M) de refroidissement se trouvant dans un circuit (20) de refroidissement du dispositif (10) de conditionnement d'air, étant, du côté (12) de haute pression, sous une pression plus haute que du côté (11) de basse pression,
**caractérisé en ce que**
- l'échangeur de chaleur (40), du côté (11) de basse pression, est disposé dans une première partie (81) d'enveloppe du dispositif (10) de conditionnement d'air et l'échangeur de chaleur (60), du côté (12) de haute pression, est disposé dans une deuxième partie (82) d'enveloppe du dispositif (10) de conditionnement d'air et
- entre la première et la deuxième parties (81, 82) de l'enveloppe, est prévue une ouverture (400) de défumage, qui est fermée lorsque le dispositif (10) de conditionnement d'air fonctionne normalement et qui peut être ouverte en cas d'incendie, en rendant possible un écoulement d'air de la première à la deuxième partie (81, 82) de l'enveloppe.
